**Europäisches Patentamt**

**European Patent Office**

**Office européen des brevets**

(11) Numéro de publication: **0 140 795**
**B1**

(12) **FASCICULE DE BREVET EUROPÉEN**

(45) Date de publication du fascicule du brevet:
04.11.87

(51) Int. Cl.⁴: **C 05 F 11/02, C 05 G 3/04**

(21) Numéro de dépôt: **84420136.8**

(22) Date de dépôt: **16.08.84**

(54) **Amendement pour la fertilisation des sols.**

(30) Priorité: **18.08.83 FR 8313687**

(43) Date de publication de la demande:
**08.05.85 Bulletin 85/19**

(45) Mention de la délivrance du brevet:
**04.11.87 Bulletin 87/45**

(84) Etats contractants désignés:
**AT BE CH DE GB IT LI LU NL SE**

(56) Documents cité:
**DE-A-1 925 272**
**FR-A-1 563 704**
**FR-A-1 569 696**
**FR-A-2 041 748**
**FR-A-2 234 245**
**GB-A-2 088 392**

(73) Titulaire: **S A I D, Rue du Stade, F-69120 Vaulx- en-Velin (FR)**

(72) Inventeur: **Laurent, Alain, 40 rue du Vieux Port, Irigny (Rhône) (FR)**

(74) Mandataire: **Maureau, Philippe, Cabinet Germain & Maureau Le Britannia - Tour C 20, bld Eugène Déruelle Boîte Postale 3011, F-69392 Lyon Cédex 03 (FR)**

LIBER, STOCKHOLM 1987

## Description

La presente invention a pour objet un amendement pour la fertilisation des sols et plus specialement pour la fertilisation des sols désertiques.

Il est connu de réaliser l'enrichissement des sols en utilisant des amendements organiques plus ou moins riches en acides humiques, avec pour but de créer ou de recréer un humus. Néanmoins, une telle solution ne donne pas satisfaction dans des sols désertiques, du fait que les plantes ont également besoin d'eau peur croître, et que les sols désertiques ont une faible capacité en eau.

La presente invention vise à pallier les lacunes de la technique existante.

A cet effet, l'amendement qu'elle concerne est constitué par un mélange de lignite à basse teneur en bitume et ayant subi un traitement lui conférant une forte teneur en acides humiques, et d'un polymère naturel ou synthétique, rétenteur d'eau, non biodégradable ou faiblement biodégradable, les proportions respectives, extraits secs, des différents composant de cet amendement varient entre 95 % et 50 % en poids pour le rétenteur d'eau.

Le polymère rétenteur d'eau entrant dans l'amendement selon l'invention peut être constitué par des dérivés cellulosiques, des dérivés d'amidon, des dérivés polyacryliques, des dérivés de polyacrylamides, des alcools polyvinyliques, des éthers cellulosiques, etc...

Selon une caractéristique de cet amendement, sa teneur en acides humiques est supérieure à 5 % en poids.

En outre, le lignite traité et mis en oeuvre comprend au moins 25 % d'acides humiques purs dont 10 % sous forme d'humates alcalins solubles dans l'eau.

Selon une autre caractéristique de l'invention, l'agent rétenteur d'eau possède une forte capacité de rétention d'eau, supérieure à 30 fois son poids et, de préférence, comprise entre 200 et 2 000 fois son poids (sans limitation superieure de capacité).

Les proportions respectives des différents composants de cet amendement varient entre 95 % et 50 % en poids pour le lignite traité et entre 5 % et 50 % en poids pour le rétenteur d'eau. Les compositions les plus courantes comprennent 70 à 80 % de lignite et 30 à 20 % de rétenteur d'eau.

La mise en oeuvre d'un tel amendement est très interessante car se traduisant par une forte augmentation de la capacité en eau utile du sol, une amélioration importante de la structure du sol, une action des acides humiques sur l'activité des engrais, une économie d'eau, et une limitation des pertes en eau du sol.

L'utilisation de cet amendement se traduit par une forte augmentation de la capacité en eau utile du sol. Par exemple, une tonne d'amendement peut détenir et mettre directement à la disposition des cultures, une fois incorporée au sol, environ 110 tonnes d'eau, dans le cas d'un amendement contenant 30 % de polyacrylamides comme rétenteur d'eau et 70 % de lignite traité.

L'utilisation de deux tonnes d'amendement à l'hectare peut accroître la capacité en eau utile du sol, réserve d'eau facilement utilisable, d'une valeur de 30 à 50 %.

L'utilisation de cet amendement se traduit par une amélioration importante de la structure du sol, grâce à l'action des acides humiques, de forte activité physico-chimique.

Cette structure se caractérise par un accroissement de la capacité en eau libre, et par une amélioration de la perméabilite assurant une meilleure pénétration de l'eau dans le sol ainsi que par la diminution du flaquage.

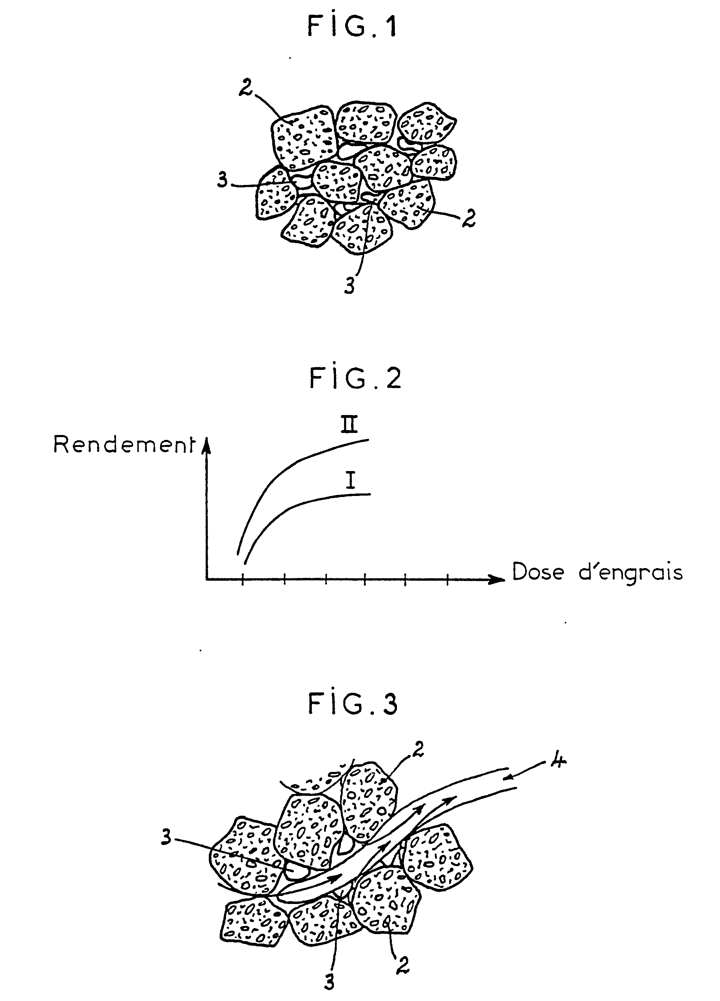

Ceci résulte, comme montré à la figure 1 du dessin schématique annexé, de l'agrégation des terres, les limons et sable fins étant agregés par le complexe argile-acides humiques, ce qui limite ia plasticité de l'argile avec les inconvénients que cela comporte.

Comme montré au dessin, l'utilisation de l'amendement permet la formation de grain (2) ménageant entre eux des espaces (3) dans lesquels se trouve l'eau libre en réserve.

L'utilisation de l'amendement selon l'invention se traduit également par une action positive des acides humiques sur l'activité des engrais en accroissant la mobilité de ceux-ci.

La figure 2 du dessin schématique annexé représente un graphique dans lequel la dose d'engrais est portée en abscisses et le rendement est porté en ordonnées. La courbe numéro I correspond a un rendement sans amendement et la courbe numéro II au rendement obtenu avec mise en oeuvre de l'amendement selon l'invention.

L'action sur l'efficacité de la fertilisation minérale est liée aux propriétes de chélations des acides humiques qui jouent le rôle de transporteurs d'ions dans le flux hydrique alimentaire.

Comme montré à la figure 3, les acides humiques permettent le transport des films d'eau vers les racines (4) des plantes. En même temps que le transport de l'eau, les acides humiques conduisent également les éléments nutritifs pour les cultures, au niveau des racines, même lorsque les conditions sont défavorables, (sol très calcaire, sol ferralitique, sol déséquilibré ou mal pourvu, manque d'eau, etc...).

La mise en oeuvre des acides humiques conduit également à une économie d'eau en améliorant le coefficient de transpiration des plantes, qui est défini comme étant le nombre de litres d'eau pour produire un kg de végétal sec. Il a, par exemple, été constaté expérimentalement que le coefficient de transpiration pouvait être ramené de 350 en culture normale, à 240 avec mise en oeuvre de l'amendement selon l'invention.

Les qualités de rétention d'eau de l'élément rétenteur assurent une optimisation de l'utilisation de l'eau en limitant sensiblement les pertes en eau du sol par évaporation et par percolation.

La mise en oeuvre des acides humiques contenus dans l'amendement selon l'invention, permet enfin d'accroître le rendement en humus des résidus de culture après incorporation de ceux-ci au sol. En effet, ces résidus étant générateurs d'humus, la mise en oeuvre de cet amendement permet d'accroître la teneur du sol en humus, donc d'obtenir un accroissement très important du niveau de fertilité.

Il est à noter que les éléments composant cet amendement sont très résistants aux dégradations sous l'effet des facteurs climatiques et biologiques. En effet, le rétenteur d'eau peut être efficace dans le sol pendant de nombreuses années, c'est-à-dire par exemple cinq ans. Pour leur part, les lignites traités mis en oeuvre se dégradent ou évoluent très lentement dans les sols et conservent une efficacité pendant au moins deux à trois ans.

A titre d'exemple, les doses d'applications d'un amendement selon l'invention contenant 30 % de rétenteur d'eau et 70 % de lignite traité, sont les suivantes en fonction de la nature du sol et de la teneur de celui-ci en matieres organiques:

| | Sol pauvre en matière organique (< à 1,5 %) | Sol moyennement pourvu en matière organique (entre 1,5 et 2 %) | Sol bien pourvu en matière organique (> à 2 %) |
|---|---|---|---|
| Sol sableux | 4 t/ha | 3 t/ha | 2 t/ha |
| Sol sablo-limoneux | 3 t/ha | 3 t/ha | 2 t/ha |
| Sol limono-argileux | 2,5 t/ha | 2 t/ha | 1,5 t/ha |
| Sol argilo-limoneux | 2 t/ha | 2 t/ha | 1,5 t/ha |
| Sol argileux | 2 t/ha | 2 t/ha | 1 t/ha |

Il s'agit de doses approximatives qui doivent être modulées après analyse des sols et du besoin en eau des cultures et après avoir tenu compte également des paramètres climatiques. Cette analyse permet de déceler et de chiffrer un déficit éventuel du sol et de déterminer la quantité et la qualité nécessaires de l'amendement a mettre en oeuvre pour le compenser.

D'un point de vue pratique, l'amendement est épandu sur le sol après labour et enfoui par le travail de reprise du labour ou bien par un simple passage provisoire d'outils à dents si la préparation définitive n'est pas encore nécessaire. L'épandage est réalisé au cours de la période de l'année permettant la constitution de la plus grande réserve d'eau dans le sol.

Il est donné, ci-après, un exemple d'une composition selon l'invention et de ses propriétés:

Le lignite mis en oeuvre est très finement broyé, de faible teneur en matière bitumineuse, et traite biologiquement par ensemencement d'une culture microbienne. Il entre pour 80 % en poids dans la composition.

Le rétenteur d'eau est constitué par un polyacrylate d'ammonium réticulé, susceptible de retenir 1200 fois son volume en eau, et très difficilement biodégradable.

Le produit ainsi obtenu présente les caractéristiques suivantes:
- Teneur en acides humiques: 25 % dont 10 % d'humates alcalins solubles dans l'eau.
- Capacité théorique de rétention d'eau par tonne de produit: 240 000 litres d'eau distillée.
- Capacité reelle de rétention d'eau en conditions d'exploitation par tonne de produit: environ 110 000 litres.
- Azote des humates d'ammonium et des composés organiques azotés: 1,5 %.
- Acides fulviques: 2 %.

Une mise en oeuvre du mélange à raison de 2 t/ha augmentera la capacité de rétention d'eau de la couche arable d'une valeur de l'ordre de 7 %.

Comme il ressort de ce qui précède, l'invention apporte une grande amélioration à la technique existante en fournissant un amendement pour la fertilisation de sols, et notamment de sols desertiques, en offrant des propriétés remarquables tout en étant d'un prix de revient raisonnable.

## Revendications

1. Amendement pour la fertilisation des sols, caractérisé en ce qu'il est constitué par un mélange de lignite a basse teneur en bitume et ayant subi un traitement lui conférant une forte teneur en acides humiques, et d'un polymère naturel ou synthétique, rétenteur d'eau, non biodégradable ou faiblement biodégradable et en ce que les proportions respectives, en extraits secs, des différents composants de cet amendement varient entre 95 % et 50 % en poids pour le lignite traité et entre 5 % et 50 % en poids pour le rétenteur d'eau.

2. Amendement selon la revendication 1, caractérisé, en ce que la teneur du lignite traité en acides humiques est supérieure à 5 % en poids rapporté à la masse totale d'amendement.

3. Amendement selon la revendication 2, caractérisé en ce que le lignite traité comprend au moins 25 % d'acides humiques purs dont 10 % sous forme d'humates alcalins solubles dans l'eau.

4. Amendement selon l'une quelconque des revendications 1 à 3, caractérisé en ce que l'agent rétenteur d'eau possède une forte capacité de rétention d'eau, supérieure à 30 fois son poids et, de préférence, comprise entre 200 et 2 000 fois son poids.

5. Amendement selon la revendication 4, caractérisé en ce que l'agent rétenteur d'eau est choisi parmi les dérivés cellulosiques, les dérivés d'amidon, les dérivés polyacryliques, les dérivés de polyacrylamides, les alcools polyvinyliques, les éthers cellulosiques.

**Patentansprüche**

1. Verbesserungszusatz für die Bodendüngung, dadurch gekennzeichnet, daß er aus einer Mischung von Lignit mit einem niedrigen Bitumengehalt, der einer Behandlung unterworfen wurde, die ihm einen erhöhten Gehalt an Huminsäuren verleiht, und einem natürlichen oder synthetischen polymeren, nicht oder schwach biologisch abbaubarem Wasserretentionsmittel besteht, und dadurch, daß die entsprechenden Anteile, bezogen auf die Trockensubstanz, der verschiedenen Bestandteile dieses Verbesserungszusatzes zwischen 95 und 50 Gew.-% für den behandelten Lignit und zwischen 5 und 50 Gew.-% für das Wasserretentionsmittel variieren.

2. Verbesserungszusatz nach Anspruch 1, dadurch gekennzeichnet, daß der Gehalt des behandelten Lignits an Huminsäuren größer als 5 Gew.-%, bezogen auf die Gesamtmasse des Verbesserungszusatzes, ist.

3. Verbesserungszusatz nach Anspruch 2, dadurch gekennzeichnet, daß der behandelte Lignit mindestens 25 % reine Huminsäuren enthält, 10 % davon in Form von wasserlöslichen Alkalisalzen der Huminsäuren.

4. Verbesserungszusatz nach einem der Ansprüche 1 bis 3, dadurch gekennzeichnet, daß das Wasserretentionsmittel eine starke Wasserretentionskapazität besitzt, die größer ist als das 30 fache seines Gewichtes und vorzugsweise zwischen dem 200- und 2000-fachen seines Gewichtes liegt.

5. Verbesserungszusatz nach Anspruch 4, dadurch gekennzeichnet, daß das Wasserretentionsmittel ausgewählt ist aus Cellulosederivaten, Stärkederivaten, Polyacrylderivaten, Polyacrylamidderivaten, Polyvinylalkoholen, Celluloseethern.

**Claims**

1. An enriching agent for the fertilization of soils, characterized in that it consists of a mixture of lignite of low bitumen content that has been submitted to a treatment endowing it with a high content of humic acids, and of natural or synthetic polymer that retains water and is non-biodegradable or only slightly biodegradable, and in that the respective proportions in the dry state of the different constituents of this enrighing agent vary between 95 % and 50 % by weight of the treated lignite and between 5 % and 50 % by weight of the water-retainer.

2. An enriching agent according to Claim 1, characterized in that the content of humic acids in the treated lignite is greater than 5 % by weight in relation to the total mass of the enriching agent.

3. An enriching agent according to Claim 2, characterized in that the treated lignite contains at least 25 % of pure humic acids, 10 % of which are in the form of water-soluble alkaline humates.

4. An enriching agent according to any of Claims 1 to 3, characterized in that the water-retaining agent possesses a substantial water retaining capacity greater than 30 times its own weight or, preferably, between 200 and 2000 times its own weight.

5. An enriching agent according to Claim 4, characterized in that the water-retaining agent is selected from cellulose derivatives, amidone derivatives, polyacrylic derivatives, polyacrylamide derivatives, polyvinyl alcohols or cellulose ethers.

# FIG.1

# FIG.2

Rendement

II

I

Dose d'engrais

# FIG.3